# EUROPÄISCHE PATENTSCHRIFT

(11) **EP 2 765 465 B1**
(45) Veröffentlichungstag und Bekanntmachung des Hinweises auf die Patenterteilung: **17.05.2017**
(21) Anmeldenummer: 13154243.3
(22) Anmeldetag: 06.02.2013
(51) Int. Cl.: G05B 19/042

(54) **Feldbuskommunikationsmodul und Verfahren zum Betrieb**
Field bus communication module and method for operation
Module de communication à bus de terrain et son procédé de fonctionnement

(43) Veröffentlichungstag der Anmeldung: 13.08.2014
(73) Patentinhaber: Siemens Aktiengesellschaft, 80333 München (DE)
(72) Erfinder: Seeburg, Harald, 92289 Ursensollen (DE)

(56) Entgegenhaltungen:
- EP-A1- 2 211 523
- EP-A2- 2 042 953
- DE-A1-102010 025 515
- DE-A1-102010 027 286

## Beschreibung

Die Erfindung betrifft ein Feldbuskommunikationsmodul der industriellen Prozessautomatisierungstechnik mit einem Feldbusanschluss zur Verbindung mit einem übergeordnetem Automatisierungssystem über einen Feldbus und mit zumindest einer ersten Schnittstelle zur Verbindung mit einem ersten Endgerät über eine Verbindungsleitung zum Einen ausgestaltet zum Datenaustausch mit dem übergeordnetem Automatisierungssystem über den Feldbus und zum Anderen ausgestaltet zum Datenaustausch mit dem ersten Endgerät über die erste Schnittstelle, wobei die zumindest erste Schnittstelle als eine Punkt-zu-Punkt-Kommunikationsschnittstelle ausgestaltet ist, mit einem Verbindungsmittel zum Umwandeln von Daten nach einem Protokoll des Feldbusses in Daten nach einem Protokoll für die zumindest erste Schnittstelle und umgekehrt.

Des Weiteren betrifft die Erfindung ein Verfahren zum Betrieb des oben genannten Feldbuskommunikationsmoduls, wobei an der Schnittstelle ein Endgerät betrieben wird, welches ein erstes Unterendgerät und ein zweites Unterendgerät aufweist, dabei wird mit einem Abbildungsmittel die Schnittstelle auf einen ersten Kanal und einen zweiten Kanal abgebildet und jedem Kanal wird eine Kanalnummer zugeordnet, über ein Zuordnungsmittel wird eine von einem der Untergeräte kommende Meldung analysiert und eine in der Meldung enthaltene Identifikationsnummer wird daraufhin geprüft, ob sie mit einer der Kanalnummern übereinstimmt.

Das erfindungsgemäße Feldbuskommunikationsmodul wird beispielsweise in einem industriell genutzten Feldbussystem mit dem Namen IO-Link genutzt. IO-Link ist ein Konzept zur einheitlichen Anbindung von Endgeräten, beispielsweise Sensoren, Aktoren und Schaltgeräte, an ein Automatisierungssystem mittels einer kostengünstigen Punkt-zu-Punkt-Verbindung. Dieser Kommunikationsstandard unterhalb einer Feldbusebene, welche den übergeordnetem Automatisierungssystem untergeordnet ist, ermöglicht eine zentrale Fehlerdiagnose und -ortung bis hin zu den Endgeräten.

Die IO-Link-Spezifikation, Versionsstand V1.0, 2008/2009, beschreibt, wie IO-Link Devices, also in diesem Fall die Endgeräte, unterschiedlicher Gerätehersteller an die Punkt-zu-Punkt-Verbindung angeschlossen werden können. Für diese Geräte können entsprechend der Spezifikation Parameter, Diagnosen etc. an einen IO-Link Master, also dem Feldbuskommunikationsmodul, übertragen werden.

In der Spezifikation "IO-Link Integration Part 1 Technicals Specification for Profibus and Profinet Related to IO-Links Specification V1.0, Version 1.00, December 2007 order No. 2.812" wurde festgelegt, wie IO-Link-Devices in die Feldbusse, Profibus und Profinet integriert werden müssen.

Die Schnittstellen der Feldbuskommunikationsmodule, an denen die IO-Link Devices angeschlossen sind, werden als Kanäle eines Moduls bzw. eines Submoduls in einem modularen Gerät abgebildet. Sendet beispielsweise ein IO-Link Device einen Alarm (z.B. Diagnose) wird dieser zusammen mit der Kanalnummer über das übergeordnete Feldbussystem, beispielsweise Profinet oder Profibus, übertragen. Die Kanalnummer ist in diesem Fall gleich der Schnittstellennummer. Ein Anwenderprogramm in einer übergeordneten Automatisierungssteuerung kann damit beispielsweise die Alarmquelle erkennen.

In der EP 2 042 953 A2 wird ein Feldbuskommunikationsmodul mit daran angeschlossenen IO-Links offenbart.

Von Nachteil ist es bei diesen Feldbuskommunikationsmodulen oder bei dem Verfahren zum Betrieb des Feldbuskommunikationsmodul, dass es nicht möglich ist, bei einem modular aufgebauten Endgerät, also einem IO-Link-Device, wie z.B. ein kompaktes Komplettgerät für den Aufbau von Verbraucherabzweigen mit optionaler Anbindung an ein AS-Interface, wobei in dem Komplettgerät funktionell die Funktionen eines Leistungsschalters, eines elektronischen Überlastrelais und eines Schützes integriert sind, diese sind überall dort einsetzbar, wo beispielsweise Drehstrom-Normmotoren direkt gestartet werden sollen, zu bestimmen, ob eine Norm von dem Leistungsschalter, dem Überlastrelais oder dem Schütz kommt. Der Nachteil besteht darin, dass wenn ein kompaktes Komplettgerät an einer Schnittstelle des Feldbuskommunikationsmoduls betrieben wird, und das Kompaktgerät eine Alarmmeldung absetzt (z.B. Diagnose) kann mit den bisher bekannten standardisierten Methoden die Alarmquelle nicht näher spezifiziert werden. Es steht mit dem Alarm lediglich fest, dass der Alarm aus dem kompakten Komplettgerät gekommen ist. Die eigentliche alarmauslösende funktionelle Einheit wie der Leistungsschalter oder das elektronische Überlastrelais oder das Schütz, können demnach nicht als Alarmquelle identifiziert werden.

In der DE 10 2010 027 286 B4 wird eine dezentrale Peripherie vorgestellt, bei welche für angeschlossene Peripheriemodule ein komplettes Prozessabbild inklusive der Quell-Adressen übertragen wird, allerdings muss hier immer alles übertragen werden, eine einzelne Meldung ist nicht möglich.

Die Aufgabe der vorliegenden Erfindung ist es, ein Feldbuskommunikationsmodul und ein Verfahren zum Betrieb des Feldbuskommunikationsmoduls bereitzustellen, welche diesen Nachteil beseitigt.

Die Aufgabe wird dadurch gelöst, dass ein Feldbuskommunikationsmodul mit den Merkmalen des Oberbegriffes des Anspruchs 1 ein Abbildungsmittel aufweist, welches ausgestaltet ist, die zumindest erste Schnittstelle auf eine Mehrzahl von Kanälen abzubilden, wobei jedem Kanal eine Kanalnummer zugeordnet ist, weiterhin aufweisend ein Zuordnungsmittel, welches ausgestaltet ist, eine von dem Endgerät über die zumindest erste Schnittstelle kommende Meldung zu analysieren und eine in der Meldung enthaltene Identifikationsnummer der entsprechenden Kanalnummer zuzuordnen, wobei das Verbindungsmittel weiterhin dazu ausgestaltet ist, die Meldung mit der Identifikationsnummer der entsprechenden Kanalnummer an das übergeordnete Automatisierungssystem weiterzuleiten. Dadurch kann in dem übergeordnetem Automatisierungssystem der Ursprung der Meldung aus dem Endgerät, also im Falle des kompakten Komplettgerätes, bezogen auf die Unterendgeräte, beispielsweise dem Leistungsschalter oder das elektronische Überlastrelais oder das Schütz, für das übergeordnete Automatisierungssystem identifizierbar gemacht werden.

Zuvor wurden Endgeräte an einem Feldbuskommunikationsmodul derart betrieben, dass ihnen genau ein Kanal zugeordnet war. Werden aber an einem Kanal mehrere Geräte betrieben, so wie es bei dem kompakten Komplettgerät der Fall ist, ist es nicht mehr möglich, über standardisierte Methoden die Alarmquelle zu ermitteln. Das Feldbuskommunikationsmodul ist demnach derart hergerichtet, dass es stellvertretend für die angeschlossenen Endgeräte bzw. die Unterendgeräte die Alarme weiter überträgt, wobei die zu übertragende Kanalnummer dementsprechend in dem Endgerät angeordnetem Unterendgerät entspricht. Erfindungsgemäß weist das Abbildungsmittel eine Konfigurationseinheit auf und ist weiterhin dazu ausgestaltet, dass es über den Feldbus mit einem Konfigurationswerkzeug hinsichtlich der Kanalabbildung parametrierbar ist. Ein Konfigurationswerkzeug ist in diesem Fall vorzugsweise eine Projektiereinheit oder ein komplettes Engineering System für eine industrielle Anwendung. Das Feldbuskommunikationsmodul ist derart aufgebaut, dass an ihm Endgeräte betrieben werden können, wobei die Endgeräte ein erstes Untergerät und ein zweites Untergerät aufweisen, wobei die Endgeräte zusätzlich eine Endgerätekonfigurationseinheit zur Konfiguration der Unterendgeräte hinsichtlich einer Identifikationsnummer aufweisen.

In einer weiteren Ausgestaltung weist das Feldbuskommunikationsmodul eine erste, zweite, dritte und vierte Schnittstelle auf, welche auch als eine Punkt-zu-Punkt-Kommunikationsschnittstelle ausgestaltet ist.

Weiterhin ist es von Vorteil, wenn je einer Schnittstelle bis zu vier Kanäle zugeordnet sind.

Bei dem Verfahren zum Betrieb des vorgenannten Feldbuskommunikationsmoduls wird die Aufgabe dadurch gelöst, dass an der Schnittstelle ein Endgerät betrieben wird, welches ein erstes Unterendgerät und ein zweites Unterendgerät aufweist, dabei wird mit einem Abbildungsmittel die Schnittstelle auf einen ersten Kanal und einen zweiten Kanal abgebildet und jedem Kanal wird eine Kanalnummer zugeordnet, über ein Zuordnungsmittel wird eine von einem der Unterendgeräte kommende Meldung analysiert und eine in der Meldung enthaltene Identifikationsnummer wird daraufhin geprüft, ob sie mit einer der Kanalnummern übereinstimmt, wobei das Endgerät derart konfiguriert wird, dass dem ersten Unterendgerät eine erste Identifikationsnummer, welche einer Kanalnummer entspricht, und das zweite Unterendgerät eine zweite Identifikationsnummer, welche einer weiteren Kanalnummer entspricht, zugeordnet ist.

Über das Verbindungsmittel wird die Meldung an ein übergeordnetes Automatisierungssystem weitergeleitet, wodurch der Ursprung der Meldung aus dem Endgerät bezogen auf die Unterendgeräte in den übergeordnetem Automatisierungsgerät identifizierbar wird.

Bei dem kompakten Komplettgerät mit dem integrierten Leistungsschalter, dem elektronischen Überlastrelais und dem Schütz, wobei diese Komponenten jeweils als ein Unterendgerät zu sehen sind, wird es mit dem vorgeschlagenen Verfahren nun möglich, wenn beispielsweise der Leistungsschalter das erste Unterendgerät ist und das elektronische Überlastrelais das zweite Unterendgerät ist, wobei die jeweiligen Untergeräte je eine eigene Identifikationsnummer erhalten, ein Alarm aus dem Endgerät daraufhin zu unterscheiden, ob dieser Alarm von dem Leistungsschalter oder von dem elektronischen Überlastrelais gekommen ist.

Bei dem vorgeschlagenen Verfahren ist es weiterhin von Vorteil, wenn das übergeordnete Automatisierungssystem über einen Feldbus mit dem Feldbuskommunikationsmodul kommuniziert und das Feldbuskommunikationsmodul über eine Punkt-zu-Punkt-Verbindung über jeweils eine Schnittstelle mit dem Endgerät kommuniziert, das übergeordnete Automatisierungssystem, das Feldbuskommunikationsmodul und das Endgerät über ein Konfigurationswerkzeug zu konfigurieren.

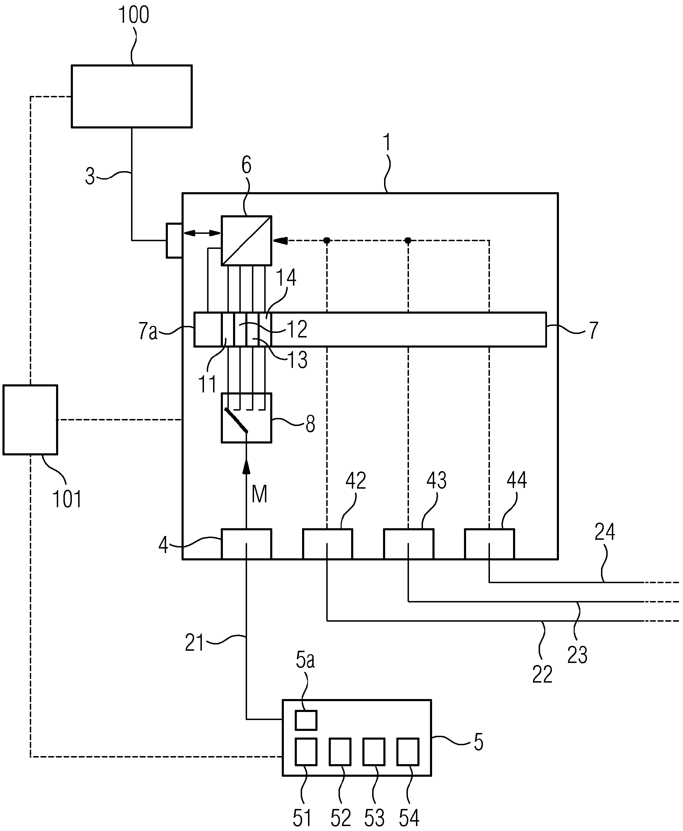

Die Figur zeigt ein Ausführungsbeispiel eines Feldbuskommunikationsmoduls mit einem übergeordneten Automatisierungssystem und zumindest einem angeschlossenen Endgerät.

Gemäß der Figur ist ein Feldbuskommunikationsmodul 1 der industriellen Prozessautomatisierung abgebildet, über einen Feldbusanschluss 2 zur Verbindung mit einem übergeordneten Automatisierungssystem 100 über einen Feldbus 3 und über eine erste Schnittstelle 4 zur Verbindung mit einem ersten Endgerät 5 über eine Verbindungsleitung 21 ist das Feldbuskommunikationsmodul 1 zwischen dem übergeordneten Automatisierungssystem 100 und dem ersten Endgerät 5 als ein Kommunikationsbindeglied angeordnet.

Das Feldbuskommunikationsmodul 1 ist zum Einen ausgestaltet zum Datenaustausch mit dem übergeordneten Automatisierungssystem 100 über den Feldbus 3 und zum Anderen ist es ausgestaltet zum Datenaustausch mit dem ersten Endgerät 5 über die erste Schnittstelle 4, wobei die zumindest erste Schnittstelle 4 als eine Punkt-zu-Punkt-Kommunikationsschnittstelle ausgestaltet ist.

Damit das erste Endgerät 5 über das Feldbuskommunikationsmodul 1 mit dem übergeordneten Automatisierungssystem 100 kommunizieren kann, weist das Feldbuskommunikationsmodul 1 ein Verbindungsmittel 6 zum Umwandeln von Daten nach einem Protokoll des Feldbusses 3 in Daten nach einem Protokoll für die zumindest erste Schnittstelle 4 und umgekehrt auf.

Damit das erste Endgerät 5 die Möglichkeit hat, bei mehreren das Endgerät 5 aufweisende Unterendgeräte, nämlich ein erstes Untergerät 51, ein zweites Unterendgerät 52, ein drittes Unterendgerät 53 und ein viertes Unterendgerät 54, für jedes Unterendgerät eine identifizierbare Diagnosemeldung abzusetzen, weist das Feldbuskommunikationsmodul 1 ein Abbildungsmittel 7 auf.

Das Abbildungsmittel 7 ist ausgestaltet, die zumindest erste Schnittstelle 4 auf eine Mehrzahl von Kanälen 11,12,13,14 abzubilden, wobei jedem Kanal eine Kanalnummer zugeordnet ist.

Das Abbildungsmittel 7 wiederum ist zwischen einem Zuordnungsmittel 8 und dem Verbindungsmittel 6 angeordnet. Dabei ist das Zuordnungsmittel 8 ausgestaltet, eine von dem ersten Endgerät 5 über die erste Schnittstelle 4 kommende Meldung M zu analysieren und eine in der Meldung M enthaltene Identifikationsnummer der entsprechenden Kanalnummer zuzuordnen, wobei das Verbindungsmittel 6 weiterhin dazu ausgestaltet ist, die Meldung M mit der der Identifikationsnummer entsprechenden Kanalnummer an das übergeordnete Automatisierungssystem 100 weiter zu leiten.

Neben der ersten Schnittstelle 4 weist das Feldbuskommunikationsmodul eine zweite Schnittstelle 42, eine dritte Schnittstelle 43 und eine vierte Schnittstelle 44 für weitere Endgeräte mit jeweiligen Unterendgeräten auf.

Über ein Konfigurationswerkzeug 101, beispielsweise einem Engineering-System, kann das übergeordnete Automatisierungssystem 100, das Feldbuskommunikationsmodul 1 und das erste Endgerät 5 hinsichtlich der benötigten Kanalabbildung entsprechend parametriert werden.

Das Feldbuskommunikationsmodul 1 weist hierzu in dem Abbildungsmittel 7 eine Konfigurationseinheit 7a auf. Die Konfigurationseinheit 7a wiederum steht mit dem Verbindungsmittel 6 in Verbindung und es können demnach so die entsprechend zugeordneten Kanalnummern zugewiesen werden.

Für eine Konfiguration des Endgerätes 5 weist das Endgerät 5 eine Endgerätkonfigurationseinheit 5a auf.

In dem Feldbuskommunikationsmodul 1 bildet das Abbildungsmittel 7 die Schnittstelle 4 auf einen ersten Kanal 11 und einem zweiten Kanal 12 ab, wobei der erste Kanal 11 für das erste Untergerät 51 und der zweite Kanal 12 für das zweite Unterendgerät 52 reserviert ist. Durch diese Zuordnung oder Abbildung wird es möglich, dass eine aus dem Endgerät 5 kommende Meldung M daraufhin untersucht werden kann, ob diese Meldung M speziell von dem ersten Untergerät 51 oder von dem zweiten Untergerät 52 kommt.

## Patentansprüche

1. Feldbuskommunikationsmodul (1) der industriellen Prozessautomatisierungstechnik mit
• einem Feldbusanschluss (2) zur Verbindung mit einem übergeordnetem Automatisierungssystem (100) über einen Feldbus (3) und mit zumindest
• einer ersten Schnittstelle (4) zur Verbindung mit einem
ersten Endgerät (5) über eine Verbindungsleitung (21) zum Einen ausgestaltet zum Datenaustausch mit dem übergeordnetem Automatisierungssystem (100) über den Feldbus (3) und zum Anderen ausgestaltet zum Datenaustausch mit dem ersten Endgerät (5) über die erste Schnittstelle (4), wobei die zumindest erste Schnittstelle (4) als eine Punkt-zu-Punkt Kommunikationsschnittstelle ausgestaltet ist,
mit
• einem Verbindungsmittel (6) zum Umwandeln von Daten nach einem Protokoll des Feldbusses (3) in Daten nach einem Protokoll für die zumindest erste Schnittstelle (4) und umgekehrt,
**gekennzeichnet durch** ein Abbildungsmittel (7), welches ausgestaltet ist die zumindest erste Schnittstelle (4) auf eine Mehrzahl von Kanälen (11,12,13,14) abzubilden, wobei jedem Kanal eine Kanalnummer zugeordnet ist,
weiterhin aufweisend ein Zuordnungsmittel (8), welches ausgestaltet ist eine von dem Endgerät (5) über die zumindest erste Schnittstelle (4) kommende Meldung (M) zu analysieren und eine in der Meldung (M) enthaltene Identifikationsnummer der entsprechenden Kanalnummer zuzuordnen, wobei das Verbindungsmittel (6) weiterhin dazu ausgestaltet ist die Meldung (M) mit der der Identifikationsnummer entsprechenden Kanalnummer an das übergeordnete Automatisierungssystem (100) weiter zu leiten, wobei das Abbildungsmittel (7) eine Konfigurationseinheit (7a) aufweist die wiederum mit dem Verbindungsmittel (6) in Verbindung steht, und weiterhin dazu ausgestaltet ist, dass es über den Feldbus (3) mit einem Konfigurationswerkzeug (101) hinsichtlich der Kanalabbildung parametrierbar ist, wobei das Feldbuskommunikationsmodul (1) derart aufgebaut ist, dass an ihm angeschlossene Endgeräte (5) betrieben werden können, wobei ein solches Endgerät (5) ein erstes Unterendgerät (51) und ein zweites Unterendgerät (52) aufweist, wobei das Endgerät (5) zusätzlich eine Endgerätkonfigurationseinheit (5a) zur Konfiguration der Unterendgeräte (51,52) hinsichtlich einer Identifikationsnummer aufweist.

2. Feldbuskommunikationsmodul (1) nach Anspruch 1, aufweisend eine erste, zweite, dritte und vierte Schnittstelle (11,12, 13,14), welche auch als eine Punkt-zu-Punkt Kommunikationsschnittstelle ausgestaltet ist.

3. Feldbuskommunikationsmodul (1) nach Anspruch 2, wobei einer Schnittstelle (11,12,13,14) bis zu vier Kanäle zugeordnet sind.

4. Verfahren zum Betrieb eines Feldbuskommunikationsmoduls (1) nach einem der Ansprüche 1 bis **3**, wobei an
- der Schnittstelle (4) ein Endgerät (5) betrieben wird, welches ein erstes Unterendgerät (51) und ein zweites Unterendgerät (52) aufweist,
- dabei wird mit einem Abbildungsmittel (7) die Schnittstelle (4) auf einen ersten Kanal (11) und einen zweiten Kanal (12) abgebildet und jedem Kanal (11,12) wird eine Kanalnummer zugeordnet,
- über ein Zuordnungsmittel (8) wird eine von einem der Untergeräte (51,52) kommende Meldung (M) analysiert und eine in der Meldung (M) enthaltene Identifikationsnummer wird daraufhin geprüft, ob sie mit einer der Kanalnummern übereinstimmt,
wobei das Endgerät (5) derart konfiguriert wird, dass dem ersten Untergerät (51) eine erste Identifikationsnummer, welche einer Kanalnummer entspricht, und das zweite Untergerät (52) eine zweite Identifikationsnummer, welche einer weiteren Kanalnummer entspricht, zugeordnet ist, über das Verbindungsmittel (6) wird die Meldung (M) an ein übergeordnetes Automatisierungssystem (100) weitergeleitet, wodurch der Ursprung der Meldung (M) aus dem Endgerät (5) bezogen auf die Unterendgeräte (51,52,53,54) in dem übergeordneten Automatisierungssystem (100) identifizierbar wird, wobei das übergeordnete Automatisierungssystem (100) über einen Feldbus (3) mit dem Feldbuskommunikationsmodul (1) kommuniziert und das Feldbuskommunikationsmodul (1) über eine Punkt-zu-Punkt Verbindung über jeweils eine Schnittstelle mit dem Endgerät (5) kommuniziert, wobei das übergeordnete Automatisierungssystem (100), das Feldbuskommunikationsmodul (1) und das Endgerät (5) über ein Konfigurationswerkzeug (101) konfiguriert werden.

## Claims

1. Fieldbus communication module (1) in industrial process automation technology having
- a fieldbus connection (2) for connection to a higher-order automation system (100) via a fieldbus (3) and having at least
- one first interface (4) for connection to a first terminal device (5) via a connecting line (21)
on the one hand embodied for data exchange with the higher-order automation system (100) via the fieldbus (3) and on the other hand embodied for data exchange with the first terminal device (5) via the first interface (4), wherein the at least first interface (4) is embodied as a point-to-point communication interface having
- a connection means (6) for converting data according to a protocol of the fieldbus (3) into data according to a protocol for the at least first interface (4) and vice versa,
**characterised by** a mapping means (7) which is embodied to map the at least first interface (4) to a plurality of channels (11,12,13,14), wherein a channel number is assigned to each channel, furthermore having an assignment means (8) which is embodied to analyse an incoming message (M) from the terminal device (5) via the at least first interface (4) and to assign an identification number included in the message (M) to the relevant channel number, wherein the connecting means (6) is furthermore embodied to forward the message (M) with the channel number corresponding to the identification number to the higher-order automation system (100), wherein the mapping means (7) has a configuration unit (7a) which in turn is connected to the connecting means (6), and is furthermore embodied such that it can be parameterized with regard to the channel mapping via the fieldbus (3) using a configuration tool (101), wherein the fieldbus communication module (1) is embodied such that terminal devices (5) connected to said communication module can be operated, wherein such a terminal device (5) has a first sub terminal device (51) and a second sub terminal device (52), wherein the terminal device (5) also has a terminal device configuration unit (5a) for configuring the sub terminal devices (51,52) with regard to an identification number.

2. Fieldbus communication module (1) according to claim 1, having a first, second, third and fourth interface (11,12,13,14) which is also embodied as a point-to-point communication interface.

3. Fieldbus communication module (1) according to claim 2, wherein up to four channels are assigned to an interface (11,12,13,14).

4. Method for operating a fieldbus communication module (1) according to one of claims 1 to 3, wherein
- a terminal device (5) having a first sub terminal device (51) and a second sub terminal device (52) is operated at the interface (4),
- in the process the interface (4) is mapped to a first channel (11) and to a second channel (12) using a mapping means (7) and a channel number is assigned to each channel (11, 12),
- an incoming message (M) from one of the sub terminal devices (51,52) is analysed using an assignment means (8), and an identification number included in the message (M) is checked to see whether it corresponds to one of the channel numbers, wherein the terminal device (5) is configured such that a first identification number, which corresponds to a channel number, is assigned to the first sub terminal device (51) and a second identification number, which corresponds to a further channel number, is assigned to the second sub terminal device (52), the message (M) is forwarded to a higher-order automation system (100) via the connecting means (6), whereby the origin of the message (M) from the terminal device (5) in relation to the sub terminal devices (51,52,53,54) is identifiable in the higher-order automation system (100), wherein the higher-order automation system (100) communicates with the fieldbus communication module (1) via a fieldbus (3) and the fieldbus communication module (1) communicates with the terminal device (5) via a point-to-point connection via an interface in each case, wherein the higher-order automation system (100), the fieldbus communication module (1) and the terminal device (5) are configured using a configuration tool (101).

## Revendications

1. Module ( 1 ) de communication à bus de terrain de la technique d'automatisation de processus industriel comprenant
• une borne ( 2 ) de bus de terrain pour la liaison à un système ( 100 ) d'automatisation supérieur hiérarchiquement par l'intermédiaire d'un bus ( 3 ) de terrain et comprenant au moins
• une première interface ( 4 ) de liaison à un premier terminal ( 5 ) par l'intermédiaire d'une ligne ( 21 ) de communication,
conformée d'une part pour échanger des données avec le système ( 100 ) d'automatisation supérieur hiérarchiquement, par l'intermédiaire du bus ( 3 ) de terrain et conformée d'autre part pour échanger des données avec le premier terminal ( 5 ), par l'intermédiaire de la première interface ( 4 ), la au moins une première interface ( 4 ) étant conformée en interface de communication point à point,
comprenant
• un moyen ( 6 ) de liaison pour transformer des données suivant un protocole du bus ( 3 ) de terrain en données suivant un protocole pour la au moins une première interface ( 4 ) et inversement,
**caractérisé par** un moyen ( 7 ) de représentation conformé pour représenter la au moins une première interface ( 4 ) sur une pluralité de canaux ( 11, 12, 13, 14 ), un numéro de canal étant affecté à chaque canal,
comportant en outre un moyen ( 8 ) d'association conformé pour analyser un message ( M ) venant du terminal ( 5 ) par l'intermédiaire de la au moins une première interface ( 4 ) et pour associer un numéro d'identification contenu dans le message ( M ) au numéro de canal correspondant, le moyen ( 6 ) de liaison étant conformé en outre pour acheminer le message ( M ) ayant le numéro de canal correspondant au numéro d'identification au système ( 100 ) d'automatisation supérieur hiérarchiquement, le moyen ( 7 ) de représentation ayant une unité ( 7a ) de configuration, qui est en liaison à son tour avec le moyen ( 6 ) de liaison
et conformé en outre pour pouvoir être paramétrisé en ce qui concerne la représentation de canal, par l'intermédiaire du bus ( 3 ) de terrain, par un outil ( 101 ) de configuration,
dans lequel le module ( 1 ) de communication à bus de terrain est conformé de manière à ce que des terminaux ( 5 ) qui y sont raccordés puissent fonctionner,
dans lequel un appareil ( 5 ) de terrain de ce genre a un premier sous-terminal ( 51 ) et un deuxième sous-terminal ( 52 ), le terminal ( 5 ) ayant en outre une unité ( 5a ) de configuration de terminal pour la configuration des sous-terminaux ( 51, 52 ) en ce qui concerne un numéro d'identification.

2. Module ( 1 ) de communication à bus de terrain suivant la revendication 1, comprenant une première, deuxième, troisième et quatrième interface ( 11, 12, 13, 14 ), conformée également en interface de communication point à point.

3. Module ( 1 ) de communication à bus de terrain suivant la revendication 2, dans lequel jusqu'à quatre canaux sont associés à une interface ( 11, 12, 13, 14 ).

4. Procédé pour faire fonctionner un module ( 1 ) de communication à bus de terrain suivant l'une des revendications 1 à 3, dans lequel
- on fait fonctionner à l'interface ( 4 ) un terminal ( 5 ), qui a un premier sous-terminal ( 51 ) et un deuxième sous-terminal ( 52 ),
- on représente à cet effet, par un moyen ( 7 ) de représentation, l'interface ( 4 ) sur un premier canal ( 11 ) et sur un deuxième canal ( 12 ) et on affecte un numéro de canal à chaque canal ( 11, 12 ),
- par l'intermédiaire d'un moyen ( 8 ) d'association, on analyse un message ( M ) venant de l'un des sous-terminaux ( 51, 52 ) et on contrôle un numéro d'identification contenu dans le message ( M ) sur le point de savoir si il coïncide avec l'un des numéros de canal,
dans lequel on configure le terminal ( 5 ) de manière à ce qu'un premier numéro d'identification, qui correspond à un numéro de canal, soit associé au premier sous-terminal ( 51 ) et qu'un deuxième numéro d'identification, qui correspond à un autre numéro de canal, soit associé au deuxième sous-terminal ( 52 ), on achemine, par le moyen ( 6 ) de communication, le message ( M ) à un système ( 100 ) d'automatisation supérieur hiérarchiquement, l'origine du message ( M ) provenant du terminal ( 5 ) pouvant, rapporté aux sous-terminaux ( 51, 52, 53, 54 ), être identifiés dans le système ( 100 ) d'automatisation supérieur hiérarchiquement, le système ( 100 ) d'automatisation supérieur hiérarchiquement communiquant par l'intermédiaire d'un bus ( 3 ) de terrain avec le module ( 1 ) de communication à bus de terrain et le module ( 1 ) de communication à bus de terrain communiquant par l'intermédiaire d'une liaison point à point par respectivement une interface avec le terminal ( 5 ), le système ( 100 ) d'automatisation supérieur hiérarchiquement, le module ( 1 ) de communication à bus de terrain et le terminal ( 5 ) étant configurés par un outil ( 101 ) de configuration.
